# EUROPÄISCHE PATENTSCHRIFT

(11) **EP 1 406 974 B1**
(45) Veröffentlichungstag und Bekanntmachung des Hinweises auf die Patenterteilung: **16.11.2005**
(21) Anmeldenummer: 02745397.6
(22) Anmeldetag: 20.06.2002
(51) Int. Cl.: C09B 67/20, C09D 11/00

(54) **WASSERBASIERENDE FARBMITTELPRÄPARATIONEN FÜR DEN INK-JET-DRUCK**
WATER-BASED COLORANT PREPARATIONS FOR INK-JET PRINTING
PREPARATIONS DE COLORANT A BASE D'EAU POUR IMPRESSION A JET D'ENCRE

(30) Priorität: 07.07.2001 DE 10133051
(43) Veröffentlichungstag der Anmeldung: 14.04.2004
(73) Patentinhaber: Clariant GmbH, 65929 Frankfurt am Main (DE)
(72) Erfinder: RANDLER, Rudolf, CH-6383 Dallenwil (CH); ROHR, Ulrike, 68199 Mannheim (DE); GEISENBERGER, Josef, 65843 Sulzbach (DE); BAUR, Rüdiger, 65817 Eppstein/Ts. (DE); MACHOLDT, Hans-Tobias, 64297 Darmstadt-Eberstadt (DE); MENZEL, Heidemarie, 65812 Bad Soden (DE)
(74) Vertreter: Hütter, Klaus
(86) Internationale Anmeldenummer: PCT/EP2002/006843
(87) Internationale Veröffentlichungsnummer: WO 2003/006555

(56) Entgegenhaltungen:
- EP-A- 0 979 844
- EP-A- 0 999 229
- DD-A- 221 742
- DE-A- 19 654 752

## Beschreibung

Gegenstand der vorliegenden Erfindung sind wasserbasierende Farbmitteldispersionen, ein Verfahren zu deren Herstellung, deren Verwendung als Aufzeichnungsflüssigkeiten, insbesondere für das Tintenstrahl- bzw. Ink-Jet-Druckverfahren, sowie deren Verwendung in elektrophotographischen Tonern, insbesondere Polymerisationstonern, in Pulverlacken und in Farbfiltern.

Das Ink-Jet-Druckverfahren ist, wie z.B. die Elektrophotographie (Laserdrucker und Kopierer), ein berührungsloses Druckverfahren (non impact printing process) und hat durch die zunehmende Verwendung von Computern vor allem im sogenannten SOHO-Bereich (small office, horne office) im Verlauf der letzten Jahre immer mehr an Bedeutung gewonnen.

Im Ink-Jet-Druck unterscheidet man zwischen den sogenannten kontinuierlichen Druckverfahren und den Drop-on-Demand-Verfahren, wobei bei den letzteren Verfahren die Tintentropfen durch ein computergesteuertes elektrisches Signal erzeugt werden. Grundsätzlich lassen sich zwei Arten von Drop-on-Demand-Ink-Jet-Verfahren unterscheiden, der sogenannte thermische Ink-Jet-Druck, auch als Bubble-Jet bezeichnet, und der piezoelektrische Ink-Jet-Druck. Während beim thermischen Ink-Jet-Druck die Druckwelle, die zum Herausschießen eines Tintentropfens aus einer Düse des Druckkopfes führt, durch den Eintrag thermischer Energie über ein Heizelement erzeugt wird, verwendet der Piezo-Ink-Jet-Druck die spontane Formänderung eines Piezokristalls bei Anlegen eines Spannungssignals, um die benötigte Druckwelle zu erzeugen. Sowohl der piezoelektrische als auch der thermische Ink-Jet-Druck zeichnen sich durch einen hohen technischen Standard für die Herstellung von Farbabbildungen mit hoher optischer Qualität bis hin zur Fotoqualität aus und sind auch für Großformatdrucke mit hoher Druckgeschwindigkeit geeignet.

Bis heute werden für den thermischen und den piezoelektrischen Ink-Jet-Druck Tinten verwendet, die auf Lösungen wasserlöslicher Farbstoffe basieren, weshalb die Ausdrucke zwar eine hohe Brillanz und optische Dichte, jedoch eine nur ungenügende Lichtechtheit und mangelnde Wasserfestigkeit aufweisen. Die genannten Nachteile der farbstoffbasierenden Ink-Jet-Tinten können mit Hilfe von Spezialpapieren nur teilweise überwunden werden. Eine Möglichkeit, die genannten Nachteile der farbstoffbasierenden Tinten zu überwinden, besteht darin, pigmentierte Tinten zu verwenden.
An pigmentierte Tinten für den Tintenstrahldruck werden eine Reihe von Anforderungen gestellt: Sie müssen zum Drucken eine geeignete Viskosität und Oberflächenspannung aufweisen, sie müssen lagerstabil sein, d.h. sie sollen nicht koagulieren und das dispergierte Pigment soll sich nicht absetzen, sie dürfen nicht zu einer Verstopfung der Druckerdüsen führen, was insbesondere bei den Pigmentpartikel enthaltenden Tinten problematisch sein kann, und sie sollen umweltfreundlich sein, d. h. weitgehend auf Wasser basieren und möglichst niedrige Konzentrationen an organischen Lösemitteln enthalten. Auch an die Reinheit der Präparationen werden hohe Anforderungen gestellt, da zu hohe Konzentrationen anorganischer oder organischer Salze und Ionen, insbesondere von Chloridionen, zur Korrosion und damit zur frühzeitigen Zerstörung der Druckköpfe oder im Falle von Bubble-Jet-Druckern zu schädlichen Ablagerungen auf den Heizelementen führen.

Hohe Anforderungen werden insbesondere an die Farbstärke, den Farbton, die Brillanz, Transparenz und Echtheitseigenschaften, wie beispielsweise Lichtechtheit, Wasserechtheit und Reibeechtheit der Pigmente und Ausdrucke gestellt. Eine hohe Lichtechtheit ist insbesondere dann von Bedeutung, wenn mit Hilfe des lnk-Jet-Verfahrens Drucke mit photographischer Qualität oder für den Außenbereich hergestellt werden sollen.

Die Feinteiligkeit der Pigmentpräparationen ist eine Grundvoraussetzung für deren Anwendung im Ink-Jet-Druck, denn um die Düsen nicht zu verstopfen, sollte die mittlere Partikelgröße der Pigmentteilchen einen Wert von 200 nm nicht überschreiten und die Teilchengrößenverteilung sehr eng sein, so dass auch die maximale Teilchengröße einen Wert von 500 nm nicht überschreitet. Neben der Feinteiligkeit ist vor allem die Flockulationsbeständigkeit ein sehr wichtiges Qualitätskriterium einer Ink-Jet-Präparation, weshalb durch geeignete Additive ein Kristallwachstum oder eine Agglomeration der Pigmentpartikel wirksam verhindert werden muss. Dies geschieht meist durch bestimmte Dispergierhilfsmittel. Eng verbunden mit der Flockulationsbeständigkeit ist die Lagerstabilität der Pigmentdispersionen, denn während längerer Lagerung, auch bei relativ zur Raumtemperatur erhöhten oder erniedrigten Temperaturen, dürfen die Pigmentteilchen nicht agglomerieren. Während des Druckens kommt es zu extremen thermischen und mechanischen Belastungen der pigmentierten Tinten; auch unter diesen Umständen muss das Dispergierhilfsmittel die Stabilität der Pigmentdispersion gewährleisten. Beim sogenannten thermischen Ink-Jet-Druckverfahren treten kurz andauernde Temperatursprünge von bis zu 500°C auf. Auch unter diesen Bedingungen darf es weder zu einer Flokkulation oder Sedimentation des Pigments auf die Heizelemente des Druckers kommen (in der englischsprachigen Literatur als "cogation" bezeichnet) noch zu einem Verstopfen der Druckerdüsen (in der englischsprachigen Literatur als "nozzle clogging" bezeichnet). Beim Druck wird die pigmentierte Tinte durch eine enge Düse geschleudert; hier treten extrem hohe Scherspannungen auf, die zu keiner Abscherung des Dispergierhilfsmittels von der Pigmentoberfläche führen dürfen.

Somit kommt dem verwendeten Dispergierhilfsmittel eine entscheidende Bedeutung zu, weil es nicht nur die physikalischen Eigenschaften, wie z.B. Oberflächenspannung und Viskosität der Dispersionen bestimmt, sondern auch für die Stabilität der Tinten gegenüber der Flockulation während der Lagerung und der Zersetzung während des Druckprozesses sorgen muss.

Bislang bekannte pigmentierte Präparationen für den Ink-Jet-Druck erfüllen oftmals nicht die von den Druckerherstellern gestellten Anforderungen, weil sie Defizite in der Feinverteilung, sowie der Temperatur- und Lagerstabilität aufweisen. Insbesondere die Stabilitätsprobleme pigmentierter Ink-Jet-Tinten sind eng verknüpft mit einer ausreichenden Stabilisierung der Pigmentpartikel in den wässrig-organischen Lösungen.

In der EP-0 979 844 werden Pigmentdispergatoren auf Basis von Block-Polymethacrylsäureester-Block-Polyalkylenoxid-Copolymeren mit terminaler Carbonsäurefunktion beschrieben. Bei diesen Dispergiermitteln besteht jedoch das Problem, dass sich bei längerer Lagerung Niederschläge bilden und so die Stabilität der Dispersionen beeinträchtigt wird.

In den Dokumenten DE,A 19654752, EP,A, 999,229 sowie DD, A 221,742 werden ebenfalls Block-Copolymerisate auf Methakrylatbasis beschrieben.

Es bestand daher die Aufgabe, Farbmittelpräparationen bereitzustellen, die leicht dispergierbar sind, gute Lagerstabilität aufweisen und insbesondere gute Druckeigenschaften im Ink-Jet-Druckverfahren aufweisen.

Überraschenderweise konnte die Aufgabe durch Verwendung wasserlöslicher Dispergierhilfsmittel auf Basis von säuregruppenfreien Block-Polymethacrylsäureester-Block-Polyethylenoxid-Copolymeren gelöst werden. Mit diesen Dispergierhilfsmitteln können wässrige Farbmittelkonzentrate hergestellt werden, welche die oben genannten Anforderungen des Ink-Jet-Drucks in hohem Maße erfüllen.

Gegenstand der vorliegenden Erfindung sind Farbmittelpräparationen, bestehend im wesentlichen aus
A) 0,1 bis 50 Gew.-%, vorzugsweise 1 bis 30 Gew.-%, mindestens eines Farbmittels aus der Gruppe der organischen Pigmente, anorganischen Pigmente und organischen Farbstoffe,
B) 0,01 bis 80 Gew.-%, vorzugsweise 0,1 bis 50 Gew.% mindestens eines wasserlöslichen Dispergierhilfsmittels auf Basis eines säuregruppenfreien Block-Polymethacrylsäureester-Block-Polyethylenoxid-Copolymeren,
C) 0 bis 30 Gew.-%, vorzugsweise 0,1 bis 15 Gew.-% mindestens eines organischen Lösemittels,
D) 0 bis 20 Gew.-%, vorzugsweise 0,1 bis 5 Gew.-%, weiterer üblicher Zusatzstoffe,
E) 10 bis 90 Gew.-%, vorzugsweise 20 bis 60 Gew.-% Wasser, jeweils bezogen auf das Gesamtgewicht der Farbmittelpräparation (100 Gew.-%).

Das relative Verhältnis der mittleren Kettenlänge des hydrophoben Methacrylsäureester-Blocks und des hydrophilen Polyethylenoxid-Blocks liegt vorzugsweise zwischen 1:10 und 10:1, besonders bevorzugt 1:1 bis 1:5, insbesondere 1:1 bis 1:3; bezogen auf die molaren Anteile des Methacrylsäureesters und des Ethylenoxids.

Die Komponente (A) ist ein feinteiliges organisches oder anorganisches Pigment und/oder ein organischer Farbstoff oder ein Gemisch verschiedener organischer und/oder anorganischer Pigmente und/oder organischer Farbstoffe. Dabei können die Pigmente sowohl in Form trockener Pulver als auch wasserfeuchter Presskuchen eingesetzt werden.

Als organische Pigmente kommen Monoazo-, Disazo-, verlackte Azo-, β-Naphthol-, Naphtol AS-, Benzimidazolon-, Disazokondensations-, Azo-Metallkomplex-Pigmente und polycyclische Pigmente wie zum Beispiel Phthalocyanin-Chinacridon-,
Perylen-, Perinon-, Thiazinindigo-, Thioindigo-, Anthanthron-, Anthrachinon-, Flavanthron-, Indanthron-, Isoviolanthron-, Pyranthron-, Dioxazin-, Chinophtalon-, Isoindolinon-, Isoindolin- und Diketopyrrolopyrrol-Pigmente oder Ruße in Betracht.

Als anorganische Pigmente kommen beispielsweise Titandioxide, Zinksulfide, Eisenoxide, Chromoxide, Ultramarin, Nickel- oder Chromantimontitanoxide, Cobaltoxide und Bismutvanadate in Betracht.

Als organische Farbstoffe kommen Säurefarbstoffe, Direktfarbstoffe oder Reaktivfarbstoffe in Betracht, wobei im Falle der Reaktivfarbstoffe auch mit Nukleophilen umgesetzte Farbstoffe eingesetzt werden können.

Die verwendeten Pigmente sollten möglichst feinteilig sein, wobei bevorzugt 95 % und besonders bevorzugt 99 % der Pigmentpartikel eine Teilchengröße ≤ 500 nm besitzen. Die mittlere Teilchengröße liegt vorzugsweise bei einem Wert < 200 nm. In Abhängigkeit vom verwendeten Pigment kann sich die Morphologie der Pigmentteilchen sehr stark unterscheiden, und dementsprechend kann auch das Viskositätsverhalten der Pigmentpräparationen, in Abhängigkeit von der Teilchenform, sehr unterschiedlich sein. Um ein günstiges Viskositätsverhalten der Präparationen zu erhalten, sollten die Teilchen bevorzugt eine würfelförmige oder kugelförmige Gestalt besitzen.
Als Auswahl besonders bevorzugter organischer Pigmente sind dabei Rußpigmente, wie z.B. Gas- oder Furnaceruße; Monoazo-, Disazo- und Benzimidazolonpigmente, insbesondere die Colour Index Pigmente Pigment Yellow 17, Pigment Yellow 74, Pigment Yellow 83, Pigment Yellow 97, Pigment Yellow 120, Pigment Yellow 128, Pigment Yellow 139, Pigment Yellow 151, Pigment Yellow 155, Pigment Yellow 180, Pigment Yellow 213, Pigment Red 57:1, Pigment Red 146, Pigment Red 176, Pigment Red 184, Pigment Red 185 oder Pigment Red 269; Phthalocyaninpigmente, insbesondere die Colour Index Pigmente Pigment Blue 15, Pigment Blue 15:3 oder Pigment Blue 15:4 und Chinacridonpigmente, insbesondere die Colour Index Pigmente Pigment Red 122 oder Pigment Violet 19 zu nennen.

Als Auswahl besonders bevorzugter organischer Farbstoffe sind dabei die Colour Index Farbstoffe Acid Yellow 17, Acid Yellow 23, Direct Yellow 86, Direct Yellow 98, Direct Yellow 132, Reactive Yellow 37, Acid Red 52, Acid Red 289, Reactive Red 23, Reactive Red 180, Acid Blue 9 und Direct Blue 199 zu nennen.

Als Komponente (B) kommen bevorzugt Verbindungen der Formel (I) in Betracht 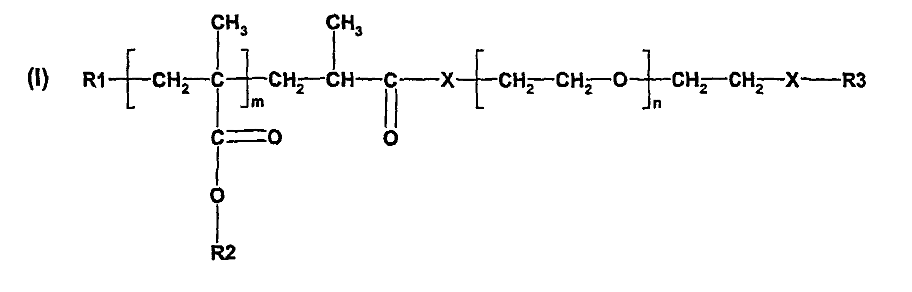 wobei
- R1: für den Rest eines Kettenreglers oder Initiators steht, der frei von aktiven Wasserstoffatomen ist,
- R2: für gleiche oder verschiedene C₁-C₂₂-Alkylreste oder für substituierte oder unsubstituierte (C₆-C₁₄)-Arylreste steht,
- X: Sauerstoff oder NH ist,
- m: einen Wert von 1 bis 200 hat,
- n: einen Wert von 1 bis 200 hat,
wobei das Verhältnis von m : n zwischen 1:10 und 10:1 liegt, bevorzugt 1:1 bis 1:5;
- R3: für H, einen C₁-C₂₂-Alkylrest oder einen substituierten oder unsubstituierten (C₆-C₁₄)-Arylrest steht.

Als Substituenten für die genannten (C₆-C₁₄)-Arylreste seien beispielsweise C₁-C₄-Alkyl, C₁-C₄-Alkoxy, F, Cl, Br, NH₂, NH(C₁-C₄-Alkyl), N(C₁-C₄-Alkyl)₂, CONH₂, CONH(C₁-C₄-Alkyl), CON(C₁-C₄-Alkyl)₂, COO(C₁-C₄-Alkyl) und OH genannt.

Von den polymeren Dispergierhilfsmitteln der Formel (I) sind die wasserlöslichen Verbindungen der Formel (II) besonders bevorzugt: 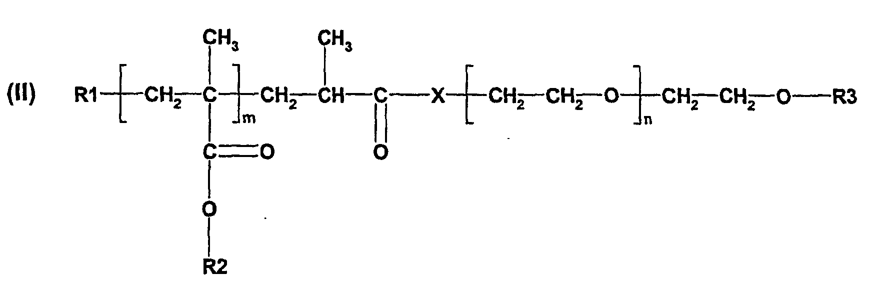 worin R1, R2, R3, X, m und n die vorstehenden Bedeutungen haben.

Als Kettenregler R1 kommen beispielsweise Mercaptane, Chloroform, Isopropylbenzol oder Isopropanol in Betracht. Bevorzugt sind C₁₂-C₁₈-Alkylmercapto-Reste, z.B. n-Dodecylmercapto, t-Dodecylmercapto und Tetradecylmercapto.
- R2: ist vorzugsweise C₁-C₁₂-Alkyl oder Phenyl.
- R3: ist vorzugsweise Wasserstoff oder C₁-C₁₂-Alkyl.
- m: ist vorzugsweise 1 bis 50.
- n: ist vorzugsweise 1 bis 100,
wobei das Verhältnis von m:n wie vorstehend beschrieben ist.

Von den polymeren Dispergierhilfsmitteln sind die wasserlöslichen Verbindungen der Formel (III) ganz besonders bevorzugt: 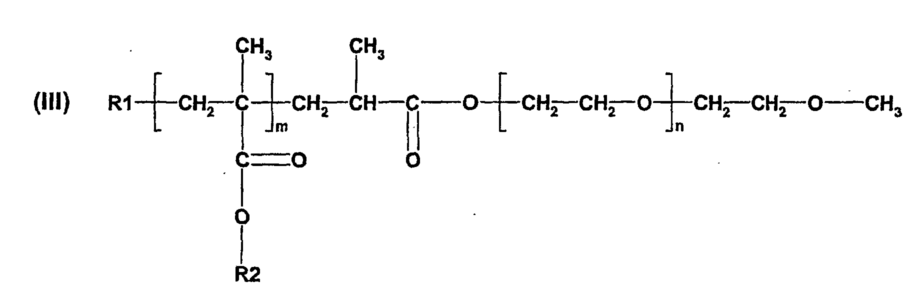 wobei
- R1: die vorstehende Bedeutung hat,
- R2: für C₁-C₄-Alkyl steht,
- m: einen Wert von 1 bis 50 hat, vorzugsweise 1 bis 20,
- n: einen Wert von 1 bis 100 hat,
wobei das Verhältnis von m:n wie vorstehend beschrieben ist.

Die HLB-Werte der erfindungsgemäß eingesetzten Blockcopolymere liegen dabei vorzugsweise in einem Bereich zwischen 10 und 20, und die Oberflächenspannung von wässrigen Lösungen (Konzentration: 1g/l) der besagten Blockcopolymere in einem Bereich von 30 bis 60 mN/m.

Die Synthese der erfindungsgemäß verwendeten Dispergierhilfsmittel ist literaturbekannt und kann zum Beispiel durch anionische Polymerisation von Alkylmethacrylat und Ethylenoxid mittels Organolithiuminitiatoren erfolgen. Diese Synthesemethode stellt hohe Anforderungen an die Reinheit der Reaktanden und eventueller Lösungsmittel und erfordert meist sehr niedrige Reaktionstemperaturen (um -78°C).
Eine präparativ einfachere Möglichkeit, die Block-Polymethacrylsäureester-Block-Polyethylenoxid-Copolymere herzustellen, ist in EP-A-0 613 910 beschrieben. Durch radikalische Polymerisation in Gegenwart eines Kettenübertragungsreagenzes werden die Methacrylsäurealkylestermoleküle polymerisiert. Dann werden aus den Polymethacrylsäureestern in Gegenwart geeigneter Katalysatoren durch Endgruppenumesterung mit Polyethylenoxid (die Verwendung solcher dihydroxyfunktioneller Verbindungen ist in EP-A-0 622 378 beschrieben) oder Polyethylenoxidmonoalkylethern die gewünschten Blockcopolymere hergestellt.
Enthält das Blockcopolymere eine endständige Hydroxylgruppe, so kann mit geeigneten Reagenzien eine endständige Alkyl- oder Arylgruppe eingeführt werden.

Die erfindungsgemäßen Farbmittelpräparationen können als Komponente (C) ein organisches Lösemittel oder Gemische derartiger Lösungsmittel enthalten, wobei diese Lösungsmittel gegebenenfalls eine wasserrückhaltende Wirkung besitzen. Geeignete Lösungsmittel sind beispielsweise ein- oder mehrwertige Alkohole, deren Ether und Ester, z. B. Alkanole, insbesondere mit 1 bis 4 C-Atomen, wie z.B. Methanol, Ethanol, Propanol, Isopropanol, Butanol, Isobutanol; zwei- oder dreiwertige Alkohole, insbesondere mit 2 bis 6 C-Atomen, z. B. Ethylenglykol, Propylenglykol, 1,3-Propandiol, 1,4-Butandiol, 1,5-Pentandiol, 1,6-Hexandiol, 1,2,6-Hexantriol, Glyzerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykolmonomethyl- oder ethyl- oder butylether, Triethylenglykolmonomethyl- oder ethylether; Ketone und Ketonalkohole, wie z.B. Aceton, Methylethylketon, Di-ethylketon, Methylisobutylketon, Methylpentylketon, Cyclopentanon, Cyclohexanon, Diacetonalkohol; Amide, wie z.B. Dimethylformamid, Dimethylacetamid und N-Methylpyrrolidon.

Weiterhin können die erfindungsgemäßen Farbmittelpräparationen als Komponente (D) noch weitere, insbesondere für Ink-Jet-Tinten übliche Zusatzstoffe enthalten, wie beispielsweise Konservierungsmittel, Antioxidantien, kationische, anionische, amphotere oder nichtionogene oberflächenaktive Substanzen (Tenside und Netzmittel), Entgaser/Entschäumer sowie Mittel zur Regulierung der Viskosität, z.B. Polyvinylalkohol, Cellulosederivate oder wasserlösliche natürliche oder künstliche Harze und Polymere als Filmbildner bzw. Bindemittel zur Erhöhung der Haft- und Abriebfestigkeit. Als pH-Regulatoren kommen organische oder anorganische Basen und Säuren zum Einsatz. Bevorzugte organische Basen sind Amine, wie z.B. Ethanolamin, Diethanolamin, Triethanolamin, N,N-Dimethyl-ethanolamin, Diisopropylamin, Aminomethylpropanol oder Dimethylaminomethylpropanol. Bevorzugte anorganische Basen sind Natrium-, Kalium-, Lithiumhydroxid oder Ammoniak. Weitere Bestandteile können hydrotrope Verbindungen sein, wie z.B. Formamid, Harnstoff, Tetramethylharnstoff, ε-Caprolactam, Ethylenglykol, Diethylenglykol, Triethylenglykol, Polyethylenglykol, Butylglykol, Methylcellosolve, Glycerin, Zucker, N-Methylpyrrolidon, 1,3-Diethyl-2-imidazolidinon, Thiodiglykol, Natrium-Benzolsulfonat, Na-Xylolsulfonat, Na-Toluolsulfonat, Na-Cumolsulfonat, Na-Benzoat, Na-Salicylat oder Na-Butylmonoglykolsulfat.

Für die Farbmittelpräparation benutztes Wasser, Komponente (E), wird vorzugsweise in Form von destilliertem oder entsalztem Wasser eingesetzt.

Die Erfindung betrifft weiterhin die Herstellung der erfindungsgemäßen Farbmittelpräparationen, die dadurch gekennzeichnet ist, dass im ersten Schritt mindestens ein Farbmittel (Komponente A), entweder als Pulver oder als Presskuchen, zusammen mit mindestens einem Dispergierhilfsmittel (Komponente B), gegebenenfalls mit mindestens einem organischen Lösemittel (Komponente C) und gegebenenfalls den anderen Zusätzen (Komponente D) in bevorzugt entionisiertem Wasser (Komponente E) angeteigt und anschließend mit einem Dissolver oder einer anderen geeigneten Apparatur homogenisiert und vordispergiert wird. Gegebenenfalls erfolgt dann noch eine Feindispergierung mit Hilfe einer Perlmühle oder einem anderen geeigneten Dispergieraggregat, wobei die Feindispergierung bzw. Mahlung unter Kühlung bis zur gewünschten Teilchengrößenverteilung erfolgt. Im Anschluss an die Feindispergierung wird die Dispersion mit entionisiertem Wasser auf die gewünschte Farbmittelkonzentration verdünnt.

Die Erfindung betrifft weiterhin einen Satz von Farbmittelpräparationen, der mindestens je eine Farbmittelpräparation der Farben Schwarz, Cyan, Magenta und Gelb enthält und der dadurch gekennzeichnet ist, dass mindestens eine der Präparationen der erfindungsgemäßen Präparation entspricht.

Bevorzugt ist dabei ein Satz von Pigmentpräparationen, dessen schwarze Präparation Ruß als Farbmittel enthält, insbesondere ein Gas- oder Furnaceruß; dessen Cyan-Präparation ein Pigment aus der Gruppe der Phthalocyaninpigmente enthält, insbesondere ein Pigment mit dem Colour Index Pigment Blue 15, Pigment Blue 15:3 oder Pigment Blue 15:4; dessen Magenta-Präparation ein Pigment aus der Gruppe der Chinacridone enthält, vorzugsweise Colour Index Pigment Red 122 oder Colour Index Pigment Violet 19, oder aus der Gruppe der Monoazo-, Disazo-, Isoindolin- oder Benzimidazolonpigmente enthält, insbesondere die Colour Index Pigmente Pigment Red 57:1, Pigment Red 146, Pigment Red 176, Pigment Red 184, Pigment Red 185 oder Pigment Red 269; und dessen Gelb-Präparation bevorzugt ein Pigment aus der Gruppe der Monoazo-, Disazo- oder Benzimidazolonpigmente enthält, insbesondere mit dem Colour Index Pigment Yellow 17, Pigment Yellow 74, Pigment Yellow 83, Pigment Yellow 97, Pigment Yellow 120, Pigment Yellow 128, Pigment Yellow 139, Pigment Yellow 151, Pigment Yellow 155, Pigment Yellow 180 oder Pigment Yellow 213.

Die Erfindung betrifft weiterhin einen Satz von Inkjet-Tinten, der wenigstens je eine Ink-Jet-Tinte der Farben Schwarz, Cyan, Magenta und Gelb enthält und des weiteren dadurch gekennzeichnet ist, dass mindestens eine der Ink-Jet-Tinten die erfindungsgemäße Farbmittelpräparation in verdünnter oder unverdünnter Form enthält.

Gegenstand der Erfindung ist auch die Verwendung der erfindungsgemäßen Farbmittelpräparationen als Farbmittel für Tinten, insbesondere Ink-Jet-Tinten, elektrophotographische Toner, insbesondere Polymerisationstoner, Pulverlacke und Farbfilter.

Unter Ink-Jet-Tinten versteht man sowohl Tinten auf wässriger (einschließlich Mikroemulsionstinten) und nicht-wässriger ("solvent-borne") Basis, UV-härtbare Tinten sowie solche Tinten, die nach dem Hot-Melt-Verfahren arbeiten.

Ink-Jet-Tinten auf wässriger Basis enthalten im wesentlichen 0,5 bis 30 Gew,-%, vorzugsweise 1 bis 15 Gew.-%, einer oder mehrerer der erfindungsgemäßen Farbmittelpräparationen, 70 bis 95 Gew.-% Wasser, 0 bis 30 Gew.-% einer oder mehrerer hydrotropen, d.h. wasserrückhaltenden Verbindungen und/oder organischer Lösungsmittel. Gegebenenfalls können die wasserbasierenden Ink-Jet-Tinten noch wasserlösliche Bindemittel und weitere Zusatzstoffe enthalten, wie z.B. Tenside und Netzmittel, Entgaser/Entschäumer, Konservierungsmittel und Antioxidantien.
Mikroemulsionstinten basieren auf organischen Lösemitteln, Wasser und gegebenenfalls einer zusätzlichen Substanz, die als Grenzflächenvermittler wirkt (Tensid). Mikroemulsionstinten enthalten 0,5 bis 30 Gew.-%, vorzugsweise 1 bis 15 Gew.-%, einer oder mehrerer der erfindungsgemäßen Farbmittelpräparationen, 0,5 bis 95 Gew.-% Wasser und 0,5 bis 95 Gew.-% organisches Lösungsmittel und/oder Grenzflächenvermittler.

Solvent-based Ink-Jet-Tinten bestehen im wesentlichen aus 0,5 bis 30 Gew.-% einer oder mehrerer der erfindungsgemäßen Farbmittelpräparationen, 70 bis 95 Gew.-% eines organischen Lösungsmittels und/oder einer hydrotropen Verbindung. Gegebenenfalls können die lösemittelbasierenden Ink-Jet-Tinten Trägermaterialien und Bindemittel enthalten, die im "Solvens" löslich sind, wie z.B. Polyolefine, Natur- und Synthesekautschuk, Polyvinylchlorid, Vinylchlorid/Vinylacetat-Copolymerisate, Polyvinylbutyrale, Wachs/ Latex-Systeme oder Kombinationen dieser Verbindungen.

UV-härtbare Tinten enthalten im wesentlichen 0,5 bis 30 Gew.-% einer oder mehrerer der erfindungsgemäßen Farbmitteldispersionen, 0,5 bis 95 Gew.-% Wasser, 0,5 bis 95 Gew.-% eines organischen Lösungsmittels, 0,5 bis 50 Gew.-% eines strahlungshärtbaren Bindemittels und gegebenenfalls 0 bis 10 Gew.-% eines Photoinitiators.

Hot-Melt-Tinten basieren meist auf Wachsen, Fettsäuren, Fettalkoholen oder Sulfon-amiden, die bei Raumtemperatur fest sind und bei Erwärmen flüssig werden, wobei der bevorzugte Schmelzbereich zwischen ca. 60 und ca. 140°C liegt. Gegenstand der Erfindung ist auch eine Hot-Melt-Ink-Jet-Tinte, bestehend im wesentlichen aus 20 bis 90 Gew.-% Wachs und 1 bis 15 Gew.-% einer oder mehrerer der erfindungsgemäßen Farbmittelpräparationen. Weiterhin können 0 bis 20 Gew.-% eines zusätzlichen Polymers (als "Farbstofflöser"), 0 bis 5 Gew.-% Dispergierhilfsmittel; 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. die Kristallisation des Wachses) sowie 0 bis 2 Gew.-% Antioxidans enthalten sein. Typische Zusatzstoffe und Hilfsmittel sind z.B. in US-A-5,560,760 beschrieben.

Die erfindungsgemäßen Ink-Jet-Tinten können hergestellt werden, indem die Farbmittelpräparationen in das Mikroemulsionsmedium oder in das wässrige oder nicht-wässrige Medium oder in das Medium zur Herstellung der UV-härtbaren Tinte oder in das Wachs zur Herstellung einer Hot-Melt-Ink-Jet-Tinte eindispergiert werden.

Außer zum Bedrucken von Papier, natürlichen oder synthetischen Fasermaterialien, Folien oder Kunststoffen können die erfindungsgemäßen Farbmittelpräparationen zum Bedrucken verschiedenster Arten von beschichteten oder unbeschichteten Substratmaterialien verwendet werden, so z.B. zum Bedrucken von Pappe, Karton, Holz und Holzwerkstoffen, metallischen Materialien, Halbleitermaterialien, keramischen Materialien, Gläsern, Glas- und Keramikfasern, anorganischen Werkstoffen, Beton, Leder, Lebensmitteln, Kosmetika, Haut und Haaren. Das Substratmaterial kann dabei zweidimensional eben oder räumlich ausgedehnt, d.h. dreidimensional gestaltet sein und sowohl vollständig oder nur teilweise bedruckt oder beschichtet werden.

Es zeigte sich, dass die erfindungsgemäßen Farbmittelpräparationen insgesamt vorteilhafte Anwendungseigenschaften besitzen und die vorstehend genannten Aufgaben und Anforderungen im Ink-Jet-Druck bestens erfüllen. Die Viskosität bleibt sowohl bei Raumtemperatur als auch bei einwöchiger Lagerung bei 60°C stabil und die Teilchengrößenverteilung ändert sich nur unbedeutend während der Lagerung. Die aus den Präparationen hergestellten Tinten zeichnen sich vor allem durch ein ausgesprochen gutes Verhalten im Ink-Jet-Druck durch gute Stabilität während der Lagerung und im Ink-Jet-Druckprozeß aus. Des weiteren zeichnen sich die hergestellten Drucke durch ihre hohe Licht- und Wasserechtheit aus.

Die erfindungsgemäßen Farbmittelpräparationen sind auch geeignet als Farbmittel in elektrophotographischen Tonern und Entwicklern, wie z.B. Einkomponenten- und Zweikomponentenpulvertonern (auch Ein- oder Zweikomponenten-Entwickler, genannt), Magnettonern, Flüssigtonern, Polymerisationstonern sowie anderen Spezialtonern. Typische Tonerbindemittel sind Polymerisations-, Polyadditions- und Polykondensationsharze, wie z.B. Styrol-, Styrolacrylat-, Styrolbutadien-, Acrylat-, Polyester- oder Phenol-Epoxidharze, Polysulfone oder Polyurethane, einzeln oder in Kombination, sowie Polyethylen und Polypropylen, die noch weitere Inhaltsstoffe, wie Ladungssteuermittel, Wachse oder Fließmittel, enthalten können oder im Nachhinein zugesetzt bekommen können.

Des weiteren sind die erfindungsgemäßen Farbmittelpräparationen auch als Farbmittel in Pulverlacken, insbesondere in triboelektrisch oder elektrostatisch versprühten Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen, geeignet. Als Pulverlackharze werden typischerweise Epoxidharze, carboxyl- und hydroxylgruppenhaltige Polyesterharze, Polyurethane und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Farbmittelpräparationen auch geeignet als Farbmittel für Farbfilter, sowohl für die additive wie für die subtraktive Farberzeugung.

### Beispiele

### I Herstellung einer Pigmentpräparation (allgemeine Vorschrift):

Das Pigment wurde, entweder als Pulver oder als Presskuchen, zusammen mit dem Dispergiermittel, dem organischen Lösemittel und den anderen Zusätzen in entionisiertem Wasser angeteigt und dann mit einem Dissolver homogenisiert und vordispergiert. Die anschließende Feindispergierung erfolgte mit Hilfe einer Perlmühle, wobei die Mahlung unter Kühlung bis zur gewünschten Teilchengrößenverteilung der Pigmentpartikel erfolgte. Im Anschluss wurde die Dispersion mit entionisiertem Wasser auf die gewünschte Pigmentendkonzentration eingestellt.

Die in den folgenden Beispielen beschriebenen Pigmentpräparationen wurden nach dem zuvor beschriebenen Verfahren hergestellt:

### Beispiele Nr. 1 bis 3 (siehe Tabelle 1): Ink-Jet-Präparation mit:

- 15 Gew.-%: Pigment
- 10 Gew.-%: Dispergiermittel 1
- 10 Gew.-%: Propylenglykol
- 1 Gew.-%: Entschäumer (®SERDAS 7010 von CONDEA)
- 64 Gew.-%: Wasser

**Tabelle 1:**

| Beispiel-Nr.: | Pigment |
|---|---|
| 1 | C.I. P. Blue 15:3 |
| 2 | C.I. P. Red 122 |
| 3 | C.I. P. Yellow 155 |

### Beispiele Nr. 4 - Nr. 10 (siehe Tabelle 2): Ink-Jet-Präparation mit:

- 15 Gew.-%: Pigment
- 10 Gew.-%: Dispergiermittel 2
- 10 Gew.-%: Propylenglykol
- 1 Gew.-%: Entschäumer (®SERDAS 7010 von CONDEA)
- 64 Gew.-%: Wasser

**Tabelle 2:**

| Beispiel-Nr.: | Pigment |
|---|---|
| 4 | C.I. P. Blue 15:3 |
| 5 | C.I. P. Red 122 |
| 6 | C.I. P. Violet 19 |
| 7 | C.I. P. Yellow 120 |
| 8 | C.I. P. Yellow 155 |
| 9 | C.I. P. Yellow 180 |
| 10 | C.I. P. Black 7 |

### Beispiele Nr. 11 - Nr. 13 (siehe Tabelle 3): Ink-Jet-Präparation mit:

- 15 Gew.-%: Pigment
- 10 Gew.-%: Dispergiermittel 3
- 10 Gew.-%: Propylenglykol
- 1 Gew.-%: Entschäumer (®SERDAS 7010 von CONDEA)
- 64 Gew.-%: Wasser

**Tabelle 3:**

| Beispiel-Nr.: | Pigment |
|---|---|
| 11 | C.I. P. Red 122 |
| 12 | C.I. P. Yellow 120 |
| 13 | C.I. P. Black 7 |

### Beispiele Nr. 14 - Nr. 20 (siehe Tabelle 4): Ink-Jet-Präparation mit:

- 15 Gew.-%: Pigment
- 10 Gew.-%: Dispergiermittel 4
- 10 Gew.-%: Propylenglykol
- 1 Gew.-%: Entschäumer (®SERDAS 7010 von CONDEA)
- 64 Gew.-%: Wasser

**Tabelle 4:**

| Beispiel-Nr.: | Pigment |
|---|---|
| 14 | C.I. P. Blue 15:3 |
| 15 | C.I. P. Red 122 |
| 16 | C.I. P. Violet 19 |
| 17 | C.I. P. Yellow 120 |
| 18 | C.I. P. Yellow 155 |
| 19 | C.I. P. Yellow 180 |
| 20 | C.I. P. Black 7 |

Die für die Herstellung der Präparationen verwendeten Dispergiermittel 1, 2, 3 und 4 bestehen aus wasserlöslichen amphiphilen Block-Polymethacrylsäureester-Polyethylenoxid-Copolymeren (AB-Blockcopolymere) der Formel (III): 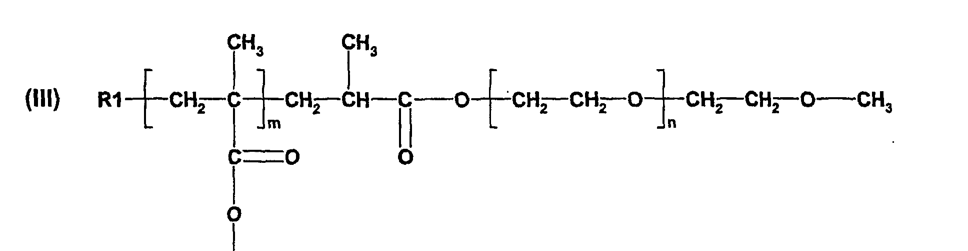 wobei für das Dispergiermittel 1 gilt:
- R1: ist Dodecylmercaptyl,
- R2: ist ein Methylrest,
- m: besitzt im Mittel einen Wert von 10 (A-Block: 1000 g/mol im Mittel),
- n: besitzt im Mittel einen Wert von 23 (B-Block: 1000 g/mol im Mittel).
wobei für das Dispergiermittel 2 gilt:
- R1: ist Dodecylmercaptyl,
- R2: ist ein Methylrest,
- m: besitzt im Mittel einen Wert von 10 (A-Block: 1000 g/mol im Mittel),
- n: besitzt im Mittel einen Wert von 68 (B-Block: 3000 glmol im Mittel).
wobei für das Dispergiermittel 3 gilt:
- R1: ist Dodecylmercaptyl,
- R2: ist ein n-Butylrest,
- m: besitzt im Mittel einen Wert von 7 (A-Block: 1000 g/mol im Mittel),
- n: besitzt im Mittel einen Wert von 23 (B-Block: 1000 g/mol im Mittel).
wobei für Dispergiermittel 4 gilt:
- R1: ist Dodecylmercaptyl,
- R2: ist ein n-Butylrest,
- m: besitzt im Mittel einen Wert von 7 (A-Block: 1000 g/mol im Mittel),
- n: besitzt im Mittel einen Wert von 68 (B-Block: 3000 g/mol im Mittel).

### II Untersuchung der physikalischen Eigenschaften der in den Beispielen genannten Pigmentzubereitungen:

Für die Untersuchung der physikalischen Eigenschaften der Pigmentzubereitungen wurden folgende Methoden und Gerätschaften verwendet:

### II.1 Viskositätsmessung (dynamische Viskosität)

Die Viskosität wurde mit einem Kegel-Platte-Viskosimeter (Roto Visco 1) der Firma Haake bestimmt (Titankegel: Ø 60 mm, 1 °), wobei die Abhängigkeit der Viskosität von der Schergeschwindigkeit in einem Bereich zwischen 0 und 700 1/s untersucht wurde. Die in der Tabelle genannten Viskositätswerte wurden bei einer Schergeschwindigkeit von 400 1/s gemessen.

### II.2 Teilchengrößen

Die Teilchengrößen der Präparationen wurden nach jeweils einwöchiger Lagerung bei 25 bzw. 60°C mit der CHDF-Methode (capillary hydrodynamic fractioning) bestimmt.

**Tabelle 5:**

| Beispiel | Viskosität [mPas] | | | D₅₀ [nm], | |
|---|---|---|---|---|---|
| | η [25°C] | η[25°C]_{1 Woche} | η[60°C]_{1 Woche} | 25°C | 60°C |
| 1 | 11,6 | 11,7 | 20,9 | 116,8 | 103,2 |
| 2 | 12,5 | 12,4 | 22,2 | 89,3 | 92,0 |
| 3 | 8,0 | 9,7 | 21,1 | 170,8 | 162,8 |
| 4 | 44,2 | 44,5 | 44,0 | 99,9 | 97,2 |
| 5 | 30,5 | 29,6 | 28,4 | 105,0 | 102,1 |
| 6 | 50,6 | 48,5 | 50,7 | 72,7 | 73,3 |
| 7 | 29,1 | 30,1 | 33,4 | 132,8 | 134,8 |
| 8 | 34,8 | 33,9 | 33,6 | 152,7 | 148,7 |
| 9 | 11,8 | 10,2 | 62,3 | 145,1 | 162,1 |
| 10 | 81,7 | 80,5 | 78,3 | 68,6 | 69,1 |
| 11 | 14,4 | 13,1 | 17,6 | 160,5 | 149,4 |
| 12 | 11,5 | 12,4 | 29,5 | 150,1 | 146,0 |
| 13 | 24,5 | 26,7 | 47,1 | 148,9 | 161,0 |
| 14 | 25,9 | 27,2 | 27,4 | 120,6 | 118,0 |
| 15 | 38,0 | 38,5 | 37,2 | 92,2 | 95,6 |
| 16 | 32,9 | 31,3 | 33,3 | 74,7 | 81,3 |
| 17 | 28,7 | 27,5 | 30,2 | 146,2 | 152,2 |
| 18 | 32,2 | 31,7 | 32,3 | 163,2 | 160,6 |
| 19 | 11,7 | 10,2 | 53,6 | 145,1 | 162,1 |
| 20 | 64,8 | 69,0 | 68,8 | 75,8 | 73,0 |

Alle in der Tabelle 5 aufgeführten Beispiele erfindungsgemäßer Pigmentpräparationen besitzen eine ausgezeichnete Fließfähigkeit. Um die Lagerstabilität zu beurteilen, wurden zunächst die Viskositäten η[25°C] der frisch hergestellten Präparationen gemessen (vgl. Tabelle 5). Danach wurden die Zubereitungen jeweils für eine Woche bei 25 bzw. 60°C gelagert, und anschließend wurden die Viskositäten η[25°C]_{1 Woche} und η[60°C]_{1 Woche} der bei 25 bzw. 60°C gelagerten Dispersionen erneut bestimmt. Im Falle sehr stabiler Dispersionen sollten sich die Viskositäten gegenüber der Ausgangsviskosität nicht verändern. Die Messergebnisse in Tabelle 5 zeigen, dass durch die Lagerung nur sehr geringfügige Viskositätsänderungen auftreten, die Dispersionen also alle stabil sind.

Die in der Tabelle 5 angegebenen D₅₀-Werte wurden jeweils nach einwöchiger Lagerung bei 25 bzw. 60°C bestimmt. Die Messungen zeigen, dass in allen Fällen nur geringe Änderungen der mittleren Teilchengrößen auftreten. Im Verlaufe der Lagerung kommt es also zu keiner Koagulation der Pigmentteilchen, was auf eine sehr gute Lagerstabilität der Dispersionen hindeutet. Um hinsichtlich der Lagerstabilität ganz sicher zu gehen, wurden einige der Dispersionen 4 Wochen lange bei 60°C gelagert - in keinem Falle wurde eine Flockulation der Dispersionen beobachtet. Noch längere Lagerzeiten wurden bei Raumtemperatur untersucht - hier wurden selbst nach 3 Monaten keinerlei Anzeichen für Sedimentation beobachtet, was für eine sehr hohe Stabilität der hergestellten Dispersionen spricht. Auch wässrige Verdünnungen dieser Pigmentkonzentrate auf einen Pigmentgehalt von 3 % zeigen die gleichen Stabilitätsmerkmale.

### III Prüfung der drucktechnischen Eigenschaften der Pigmentzubereitungen

Die Kenntnis der physikalischen Eigenschaften der Pigmentpräparationen reicht nicht aus, um eine Aussage über deren Eignung für den Ink-Jet-Druck zu treffen. Insbesondere für den thermischen Ink-Jet-Druck (Bubble-Jet) spielt das Verhalten der Pigmentdispersionen während des Druckvorgangs in den Düsen eine wichtige Rolle. Durch die großen, wenn auch nur kurzzeitigen thermischen Belastungen darf es zu keiner Zersetzung der Pigmentdispersion kommen, z.B. einer Desorption der Dispergiermittelmoleküle von der Pigmentoberfläche, die zu einer Agglomeration der Pigmentpartikel führen würde. Derartige Zersetzungsprozesse könnten einerseits zu Ablagerungen auf den Heizelementen führen (Cogation), andererseits können die Zersetzungsprodukte mit der Zeit die Düsen verstopfen (Nozzle Clogging).

Über die Eignung der Pigmentpräparationen zur Herstellung von Tinten für den Ink-Jet-Druck kann somit nur entschieden werden, indem Druckversuche unternommen werden. Um die drucktechnischen Eigenschaften der Pigmentpräparationen zu beurteilen, wurden aus den Präparationen Testtinten hergestellt und deren Verdruckbarkeit mit einem thermischen Ink-Jet-Drucker untersucht (vgl. Tabelle 6).

Für die Herstellung der Testtinten wurden die Pigmentpräparationen zunächst über einen 1 µm-Filter feinfiltriert, um Mahlkörperabrieb und eventuelle Grobanteile abzutrennen. Danach wurden die filtrierten Präparationen mit Wasser verdünnt und mit weiteren niedermolekularen Alkoholen und Polyolen versetzt. Die Testtinten hatten dann die folgende Zusammensetzung:
- 33,33 %: Pigmentpräparation (Beispiele 1 bis 20)
- 46,67 %: Entmineralisiertes Wasser
- 10 %: Ethylenglykol
- 10 %: Diethylenglykol

Die Zusammensetzung der Testtinten wurde dabei so gewählt, dass die Viskosität in einem Bereich von 1,5 bis 5 mPas lag. Um die Oberflächenspannung der Tinten auf einen für ein optimales Druckverhalten benötigten Wert einzustellen, können gegebenenfalls noch geringe Mengen an Tensid beigemischt werden.

Die Charakterisierung der Testtinten wurde mit den folgenden Methoden und Geräten durchgeführt:

### III.1 Das Verhalten der Tinte bei der Strahlbildung am Druckkopf

Mit Hilfe einer speziellen Messanordnung (HP Print RIG mit Optica System) der Firma Vision Jet wurde das Verhalten der Testtinten beim Tintenstrahldruck mit einem thermischen Ink-Jet-Drucker der Firma HP (HP 420) untersucht. Mittels einer Videokamera kann das Verhalten der Tintenstrahlen während des Druckprozesses an einzelnen Düsen des Ink-Jet-Druckkopfs untersucht werden. Die Videobilder geben Aufschluss darüber, wie sich die pigmentierte Tinte bei der Ausbildung der Tintenstrahlen verhält, ob die Tinte in Form gerader, linearer Strahlen aus den Düsen des Druckkopfs geschleudert wird, ob einzelne Tropfen gebildet werden oder ob die Tropfen Satelliten aufweisen. Die Untersuchungen liefern zusätzliche Informationen zur Form der Tintentropfen und zeigen Unregelmäßigkeiten in der Tropfenbildung auf, die zum Beispiel durch Verstopfungen einzelner Düsen verursacht werden.

Die untersuchten Tinten besitzen ein sehr gutes Strahlbildungsverhalten, was daran zu erkennen ist, dass die einzelnen Tintenstrahlen parallel ausgerichtet sind und die Düsen senkrecht zur Oberfläche verlassen. Keine der Düsen ist verstopft. Die Strahl- und Tropfenbildung ist sehr regelmäßig, wobei aus den Tintenstrahlen im Laufe der Zeit einzelne Tropfen entstehen, kleinere Satellitentropfen werden nicht beobachtet.

### III.2 Untersuchung des Druckverhaltens

Zudem wurden mit dem Drucker HP 420 Testbilder auf handelsübliche Normalpapiere (Kopierpapiere) und Spezialpapiere (Premium Qualität) der Firma HP gedruckt. Die Beurteilung der Ausdrucke bezüglich der Qualität und Güte des Druckbildes erfolgte durch rein visuelle Betrachtung. Dabei wurde untersucht, ob es zu einem starken Anfeuchten des Papiers kam, ob das Pigment in das Papier eindrang oder ob es an der Oberfläche des Papiers haften blieb. Des weiteren wurde darauf geachtet, inwieweit feine Linien perfekt wiedergegeben wurden, ob die Tinte auf dem Papier verlief, was eine geringe Auflösung zur Folge hatte, oder ob hochaufgelöste Drucke hergestellt werden konnten. Nach längeren Druckpausen wurde das Andruckverhalten untersucht, d.h. ob sofort ein guter und fehlerfreier Ausdruck gewährleistet war oder ob durch Antrocknung der Tinte einzelne Düsenkanäle verstopft waren, was zu einem schlechten Druckbild führte.

Die Kriterien (III.1) und (III.2) wurden herangezogen, um das Druckverhalten bzw. die Druckqualität der Tinten anhand des folgenden Bewertungsmaßstabs mit den Noten von 1 bis 6 zu beurteilen (vgl. Tabelle 6):
- Note 1 ---: Sehr gutes Druckbild, schöne und gleichmäßige Strahl- und Tropfenbildung!
- Note 2 ---: Sehr gutes Druckbild, gleichmäßige Strahl-, jedoch ungleichmäßige Tropfenbildung!
- Note 3 ---: Gutes Druckbild, ungleichmäßige Strahl- und Tropfenbildung!
- Note 4 ---: Ungleichmäßiges, unscharfes Druckbild, regellose Orientierung der Tintenstrahlen und Tropfen!
- Note 5 ---: Schlechtes, streifiges Druckbild, einzelne Düsen sind verstopft!
- Note 6 ---: Tinte lässt sich nicht verdrucken, nach kurzer Zeit sind alle Düsen verstopft!

**Tabelle 6:**

| Beispiel | Druckqualität |
|---|---|
| 1 | 3 |
| 2 | 2-3 |
| 3 | 1 |
| 4 | 3 |
| 5 | 2-3 |
| 6 | 1 |
| 7 | 1 |
| 8 | 1 |
| 9 | 1 |
| 10 | 1 |
| 11 | 2 |
| 12 | 1 |
| 13 | 1 |
| 14 | 2 |
| 15 | 2 |
| 16 | 1 |
| 17 | 1 |
| 18 | 1 |
| 19 | 1 |
| 20 | 1 |

Die Pigmentpräparationen erfüllen somit die Anforderungen des Ink-Jet-Drucks an die physikalischen und drucktechnischen Eigenschaften in ausgezeichneter Art und Weise und sind somit besonders für Anwendungen im Ink-Jet-Druck geeignet.

## Patentansprüche

1. Farbmittelpräparation, bestehend im wesentlichen aus
A) 0,1 bis 50 Gew.-% mindestens eines Farbmittels aus der Gruppe der organischen Pigmente, anorganischen Pigmente und organischen Farbstoffe,
B) 0,01 bis 80 Gew.% mindestens eines wasserlöslichen Dispergierhilfsmittels auf Basis eines säuregruppenfreien Block-Polymethacrylsäureester-Block-Polyethylenoxid-Copolymeren,
C) 0 bis 30 Gew.-% mindestens eines organischen Lösemittels,
D) 0 bis 20 Gew.-% weiterer üblicher Zusatzstoffe,
E) 10 bis 90 Gew.-% Wasser,
jeweils bezogen auf das Gesamtgewicht der Farbmittelpräparation (100 Gew.-%).

2. Farbmittelpräparation nach Anspruch 1, **dadurch gekennzeichnet, dass** das relative Verhältnis der mittleren Kettenlänge des Methacrylsäureester-Blocks und des Polyethylenoxid-Blocks zwischen 1:10 und 10:1, bevorzugt 1:1 bis 1:5, bezogen auf die molaren Anteile des Methacrylsäureesters und des Ethylenoxids, liegt.

3. Farbmittelpräparation nach Anspruch 1 oder 2, **dadurch gekennzeichnet, dass** die Komponente A) ein Monoazo-, Disazo-, verlacktes Azo-, β-Naphthol-, Naphtol AS-, Benzimidazolon-, Disazokondensations-, Azo-Metallkomplex-Pigment oder ein polycyclisches Pigment, insbesondere ein Phthalocyanin-, Chinacridon-,
Perylen-, Perinon-, Thiazinindigo-, Thioindigo-, Anthanthron-, Anthrachinon-, Flavanthron-, Indanthron-, Isoviolanthron-, Pyranthron-, Dioxazin-, Chinophtalon-, Isoindolinon-, Isoindolin- oder Diketopyrrolopyrrol-Pigment oder Ruß ist.

4. Farbmittelpräparation nach mindestens einem der Ansprüche 1 bis 3, **dadurch gekennzeichnet, dass** die Komponente B) eine Verbindung der Formel (I) ist 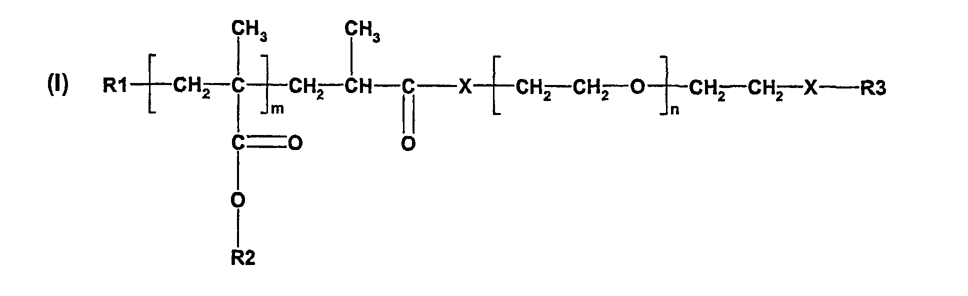 wobei
R1 für den Rest eines Kettenreglers oder Initiators steht, der frei von aktiven Wasserstoffatomen ist,
R2 für gleiche oder verschiedene C₁-C₂₂-Alkylreste oder für substituierte oder unsubstituierte (C₆-C₁₄)-Arylreste steht,
X Sauerstoff oder NH ist,
m einen Wert von 1 bis 200 hat,
n einen Wert von 1 bis 200 hat,
wobei das Verhältnis von m : n zwischen 1:10 und 10:1 liegt, bevorzugt 1:1 bis 1:5;
R3 für H, einen C₁-C₂₂-Alkylrest oder einen substituierten oder unsubstituierten (C₆-C₁₄)-Arylrest steht.

5. Farbmittelpräparation nach Anspruch 4, wobei die Komponente B) eine Verbindung der Formel (III) ist 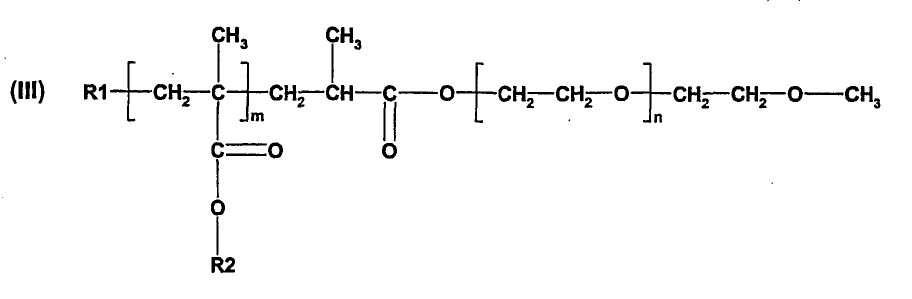 wobei
R1 die in Anspruch 4 genannte Bedeutung hat,
R2 für C₁-C₄-Alkyl steht,
m einen Wert von 1 bis 50 hat, vorzugsweise 1 bis 20,
n einen Wert von 1 bis 100 hat,
wobei das Verhältnis von m:n wie in Anspruch 4 beschrieben ist.

6. Verfahren zur Herstellung einer wässrigen Farbmittelpräparation nach einem oder mehreren der Ansprüche 1 bis 5, **dadurch gekennzeichnet, dass** die Komponente A zusammen mit mindestens einem Dispergiermittel (Komponente B), gegebenenfalls mit mindestens einem organischen Lösemittel (Komponente C) und gegebenenfalls den anderen Zusätzen (Komponente D) in Wasser (Komponente E) angeteigt wird und die Mischung homogenisiert und gegebenenfalls feinverteilt wird.

7. Verwendung einer Farbmittelpräparation nach einem oder mehreren der Ansprüche 1 bis 5 als Farbmittel für Drucktinten, insbesondere für Ink-Jet-Tinten, elektrophotographische Toner, insbesondere Polymerisationstoner, Pulverlacke und Farbfilter.

8. Satz von Farbmittelpräparationen, der mindestens je eine Farbmittelpräparation der Farben Schwarz, Cyan, Magenta und Gelb enthält, **dadurch gekennzeichnet, dass** mindestens eine der Präparationen eine wässrige Farbmittelpräparation nach einem oder mehreren der Ansprüche 1 bis 5 ist.

9. Satz von Farbmittelpräparationen gemäß Anspruch 8, **dadurch gekennzeichnet, dass**
das Farbmittel der schwarzen Farbmittelpräparation ein Ruß, vorzugsweise ein Gas- oder Furnaceruß ist,
das Farbmittel der cyan-farbigen Farbmittelpräparation ein Pigment aus der Gruppe
der Phthalocyaninpigmente, vorzugsweise Colour Index P. Blue 15, P. Blue 15:3 oder P. Blue 15:4,
das Farbmittel der magenta-farbigen Farbmittelpräparation ein Pigment aus der Gruppe der Chinacridonpigmente, vorzugsweise ein Colour Index P. Red 122 oder P. Violet 19 ist, oder ein Pigment aus der Gruppe der Monoazo-, Disazo-, Isoindolin- oder Benzimidazolonpigmente, vorzugsweise ein Colour Index P. Red 57:1, P. Red 146, P. Red 176, P. Red 184, P. Red 185 oder P. Red 269 ist, und das Farbmittel der gelben Farbmittelpräparation ein Pigment aus der Gruppe der Monoazo-, Disazo-, oder Benzimidazolonpigmente, vorzugsweise Colour Index P. Yellow 17, P. Yellow 74, P. Yellow 83, P. Yellow 97, P. Yellow 120, P. Yellow 128, P. Yellow 139, P. Yellow 151, P. Yellow 155, P. Yellow 180 oder P. Yellow 213 ist.

10. Satz von Farbmittelpräparationen nach Anspruch 8 oder 9, **dadurch gekennzeichnet, dass** die jeweiligen Farbmittelpräparationen Drucktinten, insbesondere Ink-Jet-Tinten, sind.

## Claims

1. A colorant preparation consisting essentially of
A) 0.1 to 50% by weight of at least one colorant selected from the group consisting of organic pigments, inorganic pigments and organic dyes,
B) 0.01 to 80% by weight of at least one watersoluble dispersing assistant based on a block-polymethacrylic ester-block-polyethylene oxide copolymer which is acid group free,
C) 0 to 30% by weight of at least one organic solvent,
D) 0 to 20% by weight of further customary additives,
E) 10 to 90% by weight of water,
each percentage being based on the total weight of the colorant preparation (100% by weight).

2. A colorant preparation as claimed in claim 1, **characterized by** the relative ratio of the average chain length of the methacrylic ester block and of the polyethylene oxide block being between 1:10 and 10:1, more preferably 1:1 to 1:5, based on the molar fractions of the methacrylic ester and of the ethylene oxide.

3. A colorant preparation as claimed in claim 1 or 2, **characterized by** component A) being a monoazo, disazo, laked azo, β-naphthol, Naphthol AS, benzimidazolone, condensed disazo, azo metal complex pigment or a polycyclic pigment, especially a phthalocyanine, quinacridone, perylene, perinone, thiazineindigo, thioindigo, anthanthrone, anthraquinone, flavanthrone, indanthrone, isoviolanthrone, pyranthrone, dioxazine, quinophthalone, isoindolinone, isoindoline or diketopyrrolopyrrole pigment or carbon black.

4. A colorant preparation as claimed in one or more of claims 1 to 3, **characterized by** component B) being a compound of the formula (I) 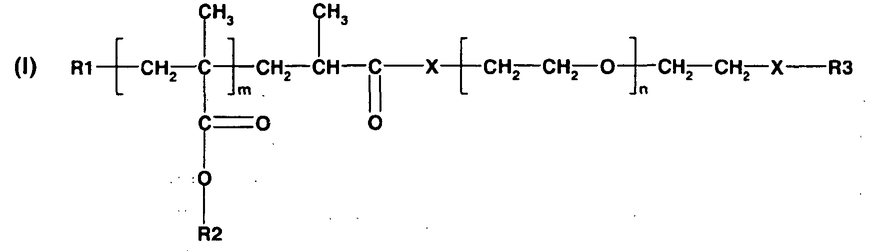 where
R1 is the radical of a chain regulator or of an initiator that is free of active hydrogen atoms,
R2 represents identical or different C₁-C₂₂-alkyl radicals or represents substituted or unsubstituted (C₆-C₁₄)-aryl radicals,
X is oxygen or NH,
m is from 1 to 200,
n is from 1 to 200,
subject to the proviso that the ratio of m : n is between 1:10 and 10:1, preferably 1:1 to 1:5;
R3 is H, a C₁-C₂₂-alkyl radical or a substituted or unsubstituted (C₆-C₁₄) -aryl radical.

5. A colorant preparation as claimed in claim 4, wherein component B) is a compound of the formula (III) 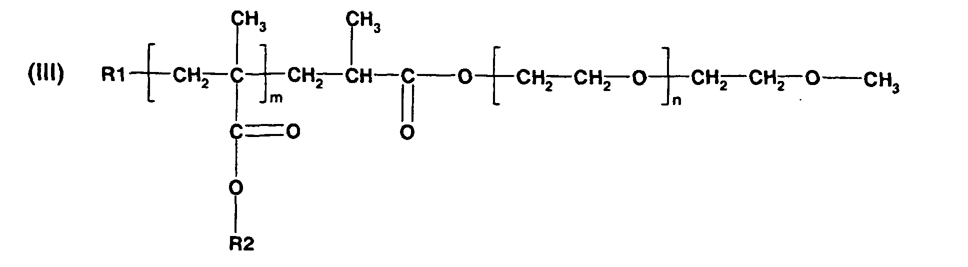 where
R1 is as defined in claim 4,
R2 is C₁-C₄-alkyl,
m is from 1 to 50 and preferably from 1 to 20,
n is from 1 to 100,
subject to the ratio of m:n being as described in claim 4.

6. A process for producing an aqueous colorant preparation as claimed in one or more of claims 1 to 5, which comprises component A being pasted up together with at least one dispersant (component B), optionally with at least one organic solvent (component C) and optionally the other additions (component D) in water (component E) and the mixture being homogenized and if appropriate finely dispersed.

7. Use of a colorant preparation as claimed in one or more of claims 1 to 5 as a colorant for printing inks, especially for ink jet inks, electrophotographic toners, especially polymerization toners, powder coatings and color filters.

8. A set of colorant preparations that includes at least one colorant preparation in each of the colors black, cyan, magenta and yellow, **characterized by** at least one of the preparations being an aqueous colorant preparation as claimed in one or more of claims 1 to 5.

9. A set as claimed in claim 8, **characterized by** the colorant of the black colorant preparation being a carbon black, preferably a lampblack or a furnace, black,
the colorant of the cyan colorant preparation being a pigment from the group of the phthalocyanine pigments, preferably Colour Index P. Blue 15, P. Blue 15:3 or P. Blue 15:4,
the colorant of the magenta colorant preparation being a pigment from the group of the quinacridone pigments, preferably a Colour Index P. Red 122 or P. Violet 19 or being a pigment from the group of the monoazo, disazo, isoindoline or benzimidazolone pigments, preferably a Colour Index P. Red 57:1, P. Red 146, P. Red 176, P. Red 184, P. Red 185 or P. Red 269, and
the colorant of the yellow colorant preparation being a pigment from the group of the monoazo-, disazo-, or benzimidazolone pigments, preferably Colour Index P.
Yellow 17, P. Yellow 74, P. Yellow 83, P. Yellow 97, P. Yellow 120, P. Yellow 128,
P. Yellow 139, P. Yellow 151, P. Yellow 155, P. Yellow 180 or P. Yellow 213.

10. A set as claimed in claim 8 or 9, **characterized by** the respective colorant preparations being printing inks, especially ink jet inks.

## Revendications

1. Préparation de colorant, constituée essentiellement de
A) 0,1 à 50 % en poids d'au moins un colorant du groupe des pigments organiques, pigments inorganiques et colorants organiques,
B) 0,01 à 80 % en poids d'au moins un adjuvant de dispersion soluble dans l'eau à base d'un copolymère exempt de groupes acides de type polyméthacrylate séquencé-poly(oxyéthylène) séquencé,
C) 0 à 30 % en poids d'au moins un solvant organique,
D) 0 à 20 % en poids d'autres additifs usuels,
E) 10 à 90 % en poids d'eau,
respectivement par rapport au poids total de la préparation de colorant (100 % en poids).

2. Préparation de colorant selon la revendication 1, **caractérisée en ce que** le rapport relatif de la longueur de chaîne moyenne de la séquence de méthacrylate et de la séquence de polyoxyde d'éthylène se situe entre 1:10 et 10:1, de préférence entre 1:1 et 1:5, par rapport aux proportions molaires du méthacrylate et de l'oxyde d'éthylène.

3. Préparation de colorant selon la revendication 1 ou 2, **caractérisée en ce que** le composant A) est un pigment monoazoïque, diazoïque, azoïque laqué, β-naphtol, naphtol AS, benzimidazolone, de condensation diazoïque, azoique-complexe métallique ou un pigment polycyclique, en particulier un pigment de phtalocyanine, quinacridone, pérylène, périnone, thiazinindigo, thioindigo, anthanthrone, anthraquinone, flavanthrone, indanthrone, isoviolanthrone, pyranthrone, dioxazine, quinophtalone, isoindolinone, isoindoline ou dicétopyrrolopyrrrole ou du noir de carbone.

4. Préparation de colorant selon au moins l'une des revendications 1 à 3, **caractérisée en ce que** le composant B) est un composé de formule (I) 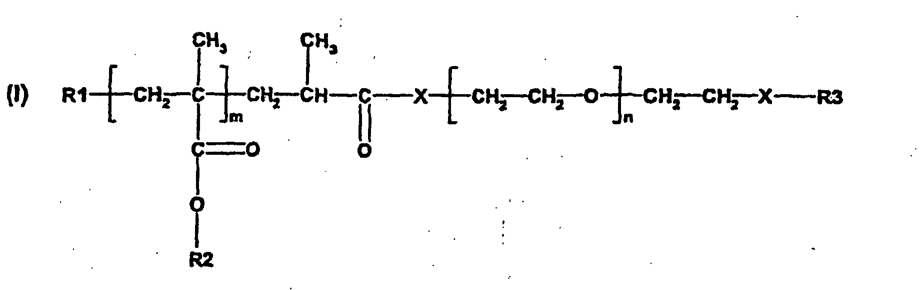 dans laquelle
R1 représenté le radical d'un régulateur de chaîne ou d'un amorceur, qui est dénué d'atomes d'hydrogène,
R2 représente des radicaux alkyle en C₁ à C₂₂ identiques ou différents ou des radicaux aryle en C₆ à C₁₄ substitués ou non substitués,
X est l'oxygène ou NH,
m a une valeur de 1 à 200,
n a une valeur de 1 à 200,
le rapport de m:n se situant entre 1:10. et 10:1, de préférence entre 1:1 et 1:5 ;
R3 représente H, un radical alkyle en C₁ à C₂₂ ou un radical aryle en C₆ à C₁₄ substitué ou non substitué.

5. Préparation de colorant selon la revendication 4, dans laquelle le composant B) est un composé de formule (III) 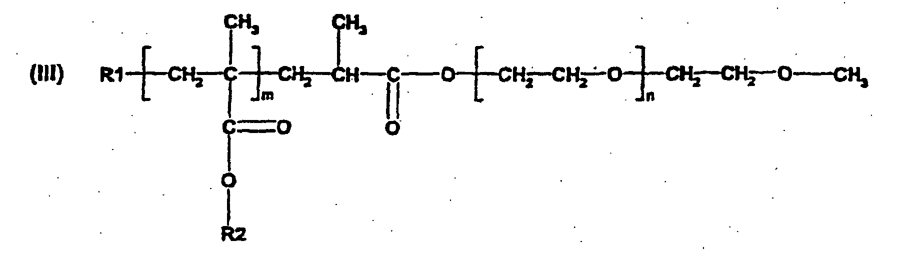 dans laquelle
R1 a la signification indiquée à la revendication 4,
R2 représente un alkyle en C₁ à C₄,
m a une valeur de 1 à 50, de préférence de 1 à 20,
n a une valeur de 1 à 100,
le rapport de m:n étant comme décrit à la revendication 4.

6. Procédé de fabrication d'une préparation de colorant aqueuse selon une ou plusieurs des revendications 1 à 5, **caractérisé en ce que** l'on reprend le composant A avec au moins un agent dispersant (composant B), éventuellement avec au moins un solvant organique (composant C) et éventuellement les autres additifs (composant D) dans l'eau (composant E) et **en ce que** l'on homogénéise le mélange et éventuellement on le divise finement.

7. Utilisation d'une préparation de colorant selon une ou plusieurs des revendications 1 à 5 comme colorant pour des encres d'impression, en particulier pour des encres de jet d'encre, des toners électrophotographiques, en particulier des toners de polymérisation, des vernis en poudre et des filtres de couleur.

8. Jeu de préparations de colorant, qui contient au moins respectivement une préparation de colorant des couleurs noir, cyan, magenta et jaune, **caractérisé en ce qu'**au moins l'une des préparations est une préparation aqueuse de colorant selon une ou plusieurs des revendications 1 à 5.

9. Jeu de préparations de colorant selon la revendication 8, **caractérisé en ce que**
le colorant de la préparation de colorant noir est un noir de carbone, de préférence un noir de gaz ou un noir fourneau,
le colorant de la préparation de colorant de couleur cyan un pigment du groupe des pigments de phtalocyanine, de préférence Colour Index P. Blue 15, P. Blue 15:3 ou P. Blue 15:4,
le colorant de la préparation de colorant de couleur magenta un pigment du groupe des pigments de quinacridone, de préférence un Colour Index P. Red 122 ou P. Violet 19, ou un pigment du groupe des pigments monoazoiques, diazoïques, isoindoline ou benzimidazolone, de préférence un Colour Index P. Red 57:1, P. Red 146, P. Red 176, P. Red 184, P. Red 185 ou P. Red 269, et le colorant de la préparation de colorant jaune est un pigment du groupe des pigments monoazoïques, diazoïques ou benzimidazolone, de préférence Colour Index P. Yellow 17, P. Yellow 74, P. Yellow 83, P. Yellow 97, P. Yellow 120,P. Yellow 128, P. Yellow 139, P. Yellow 151, P. Yellow 155, P. Yellow 180 ou P. Yellow 213.

10. Jeu de préparations de colorant selon la revendication 8 ou 9, **caractérisé en ce que** les préparations respectives de colorant sont des encres d'impression, en particulier des encres pour jet d'encre.
